# EUROPÄISCHE PATENTSCHRIFT

(11) **EP 2 119 589 B1**
(45) Veröffentlichungstag und Bekanntmachung des Hinweises auf die Patenterteilung: **06.06.2012**
(21) Anmeldenummer: 09010062.9
(22) Anmeldetag: 05.03.2002
(51) Int. Cl.: B60N 2/08

(54) **Einrichtung für eine Sitzlängsverstellung, insbesondere innerhalb eines Kfz**
Device for horizontal adjustment of a seat, in particular inside a motor vehicle
Dispositif pour un siège réglable en longueur, en particulier à l'intérieur d'un véhicule automobile

(30) Priorität: 05.03.2001 DE 10110245
(43) Veröffentlichungstag der Anmeldung: 18.11.2009
(62) Teilanmeldung aus: 07003473.1
(73) Patentinhaber: IMS Gear GmbH, 78166 Donaueschingen (DE)
(72) Erfinder: Hofschulte, Wolfram H., 79848 Bonndorf (DE); Wöhrle, Michael, 78078 Niedereschach (DE); Probst, Frank, 78052 Obereschach (DE); Krimmel, Fred, 72458 Albstadt (DE)
(74) Vertreter: Patentanwälte Westphal, Mussgnug & Partner

(56) Entgegenhaltungen:
- DE-A1- 19 912 978
- DE-U1- 29 513 272
- JP-U- 60 127 238
- JP-U- 62 076 037
- US-A- 5 303 983

## Beschreibung

Die Erfindung betrifft eine Einrichtung für eine Sitzlängsverstellung, insbesondere innerhalb eines Kfz, gemäß den Merkmalen des Oberbegriffs des Anspruchs 1.

Solche Einrichtungen sind z. B. aus JP-62-076037 U bekannt.

Solche Sitzlängsverstellungen sind zwischenzeitlich hinlänglich bekannt. Die Sitzlängsverstellungen weisen eine an einem Chassis festgelegte Unterschiene auf, innerhalb der eine Oberschiene, an der der Sitz befestigt ist, motorisch verfahrbar ist. Hierbei sitzt innerhalb der Oberschiene eine an der Unterschiene mit ihren jeweiligen Enden festgelegte Spindel, auf welcher ein mit der Oberschiene feststehend gekoppeltes Getriebe axial beweglich angeordnet ist. Der Sitz, der sich auf den beiden parallel zueinander angeordneten Oberschienen befindet, kann über eine motorische Einrichtung, die zwischen den Schienen sitzt, verfahren werden.

Beispiele für Einrichtungen zu Sitzlängsverstellungen sind in DE 36 40 197 A1, DE 42 08 948 C2, DE 196 42 665 C2, DE 198 15 283 A1, DE 198 44 817 A1, DE 199 44 690 A1, WO 95/16 585 und DE 199 12 978 A beschrieben worden.

Der Erfindung liegt die Aufgabe zugrunde, eine kompakte Sitzlängsverstellungseinrichtung anzugeben, bei der nur wenige Bauteile notwendig sind. Vorteilhafterweise soll diese im Falle eines Crashs die auftretenden Kräfte ohne weiteres aufnehmen. Hierbei soll das aufzufindende Getriebe zur Längsverstellung des Sitzes die Rotationsbewegung des Antriebsmotors in eine Translationsbewegung umwandeln.

Eine weitere Aufgabe der vorliegenden Erfindung besteht darin, dass der Bauraum der Sitzlängsverstellungseinrichtung verhältnismäßig klein, vorzugsweise in der Breite nur 15 mm betragen soll. Darüber hinaus soll die zulässige Überragung der Oberschiene ebenfalls nicht allzu groß, maximal etwa 15 mm sein. Schließlich soll die erfindungsgemäße Einrichtung eine Festigkeitsforderung in beide Richtungen erfüllen, die bspw. 25000 N beträgt Schließlich soll die erfindungsgemäße Einrichtung verhältnismäßig schnell, d. h. z. B. zwischen 15 und 25 mm/s über einen verhältnismäßig langen Verstellbereich von z. B. 300 mm verstellbar sein.

Diese Aufgabe wird durch eine Einrichtung mit den Merkmalen des Anspruchs 1 gelöst.

Demnach ist erfindungsgemäß ein Schneckenrad koaxial auf die Spindelmutter durch Kunststoffspritzen aufgebracht.

Weiterbildungen der Erfindung sind Gegenstand der hierauf bezogenen Unteransprüche.

In einer bevorzugten Ausbildung der Erfindung wird die Rotationsbewegung des Motors über eine Flexwelle, eine Schnecke, eine Spindel und eine Spindelmutter in die Translationsbewegung umgewandelt.

Zur Geräuschreduzierung empfiehlt es sich, die Spindel vorzugsweise exakt parallel zur Ober- und Unterschiene auszurichten.

In einer anderen Weiterbildung der Erfindung ist mindestens eines der Wandteile der Oberschiene mit einer Ausnehmung versehen, durch welche eine mit einem Antriebsmotor gekoppelte Flexwelle geführt ist.

In einer weiteren Ausbildung der Erfindung sind Seitenwandungen der Oberschiene als Schlitzbrücken ausgebildet und in das Innere der Oberschiene gedrückt, wobei sich das Getriebegehäuse an diesen Schlitzbrücken abstützen kann.

Das Getriebegehäuse besteht vorzugsweise aus zwei aus Kunststoff bestehenden Gehäuseschalen, welche durch Ultraschallverschweißung miteinander verbunden sind. Zweckmäßigerweise ist das Gehäuse, das durch Ultraschallverschweißung der beiden Gehäusehälften verbunden ist, nur auf Druckbelastung ausgelegt.

Eine klemmende Halterung des Getriebes wird erfindungsgemäß durch gegenüberliegend in eine Aussparung der Oberschiene eingearbeitete L-förmig gebogene Metallbügel erreicht, zwischen denen das Getriebegehäuse mit Wandschrägen eingeschoben wird.

Die Spindelmutter und die oben erwähnte Stützscheibe, welche sich im Crashfall in Wandungen der Oberschiene abstützen kann, sind vorzugsweise einteilig bzw. einstückig ausgebildet. Beide bestehen aus Metall.

Die Funktionsweise der Sitzlängsverstellung ist folgende. Das Getriebe wird in eine U-förmige Sitzschiene eingebaut. Diese Sitzschiene besteht aus einer Unter- und einer Oberschiene, wie oben erwähnt. Die Unterschiene ist mit der Fahrzeugkarosserie verbunden, während die Oberschiene mit dem Fahrzeugsitz verbunden ist. Die Spindel selbst ist über zwei Schrauben mit der Unterschiene verbunden. Über die Translationsbewegung der Spindel-Spindelmutterpaarung erfolgt die Verstellung des Sitzes. Zur Verstellung eines Sitzes werden zwei Schienen und damit zwei Getriebe (ein linkes und ein rechtes) benötigt.

Die Hauptfunktion des Getriebes besteht in der Umwandlung der Rotationsbewegung in eine Translationsbewegung. Die Rotationsbewegung wird mittels eines Motors und der adaptierten Flexfälle über einen in der Getriebeschnecke integrierten Vierkant auf das Getriebe übertragen. Die Spindel wird über das umspritzte Schneckenrad mit einem definierten Übersetzungsverhältnis angetrieben. Die Umwandlung in die Translationsbewegung erfolgt über die Spindel-Spindelmutterpaarung. Beide Teile verfügen über ein Trapezgewinde.

Das erfindungsgemäße Getriebe zeichnet sich insbesondere dadurch aus, daß es im Crashfall sehr hohe Kräfte aufnehmen kann. Das Gehäuse des Getriebes ist selbst nicht in der Lage die Kräfte bei einem Frontalcrash aufzunehmen. Solche Kräfte liegen bei etwa 24000 N. Im Crashfall wird bei dem erfindungsgemäßen Getriebe das Gehäuse des Getriebes zerstört und die Stützscheibe, die aus Metall besteht, kann beidseitig gegen die Kontaktflächen der Oberschiene anstoßen. Die Teile Oberschiene, Stützscheibe, Spindel, Spindelmutter und Unterschiene befinden sich bei der erfindungsgemäßen Einrichtung für eine Sitzlängsverstellung im Crashfall im Kraftfluss und können vorteilhafterweise die Crashkräfte aufnehmen.

Die Einrichtung für eine Sitzlängsverstellung zeichnet sich durch eine freie Positionierbarkeit der Getriebe auf der Schiene, der einstückigen Ausbildung Stützscheibe/Spindelmutter, eine drehende Mutter und eine feststehende Spindel aus. Darüber hinaus ergibt sich mit der erfindungsgemäßen Einrichtung ein größerer Verfahrweg bei gleichen Einbaubedingungen.

Darüber hinaus zeichnet sich die erfindungsgemäße Einrichtung bzw. das darin realisierte Getriebe durch folgende Merkmale aus.

Der getriebetechnische Verstellantrieb besteht nur aus vier bzw. fünf Bauteilen. Die Verzahnungsteile des Schneckengetriebes werden in einem Kunststoffgehäuse direkt gelagert. Auf gesonderte Lagerbauteile kann verzichtet werden. Die Käfigbestandteile werden durch Ultraschallverschweißung mit dem Hinblick auf spielfreie Funktion der Verzahnungsteile über einen individuellen Absenkweg verbunden und fixiert. Die Flexwellenanbindung stellt eine koaxiale Fixierung der rotierenden Flexwelle zur Antriebsschnecke sicher und wird vorzugsweise über eine Bajonettverbindung mit Schnappverschluss am Kunststoffkäfig befestigt.

Das Getriebegehäuse wird mittels Schlitzbrücken und Blechdurchzüge spielfrei aber elastisch mit der Sitzschiene verbunden und kann individuell im Montageprozess angepasst werden. Die Spindelmutter ist zugleich Schneckenrad und Stützscheibe. Die integrierte Stützscheibe entlastet im Falle eines Crashs das Kunststoffgetriebe von Crashkräften. Die Stützscheibe stützt sich dabei mittels Überstand an in der Sitzschiene angebrachter Ausnehmungen ab. Die Gewindespindel läßt sich für Montage und Reparaturzwecke nachträglich demontieren.

Die erfindungsgemäße Einrichtung zur Sitzlängsverstellung wird nachfolgend im Zusammenhand mit mehreren Figuren anhand eines Ausführungsbeispieles näher erläutert. Es zeigen:
- Fig. 1: eine perspektivische Darstellung der Unterschiene mit eingebauter Spindel sowie auf der Spindel sitzendem Getriebe in Draufsicht in perspektivischer Darstel- lung,
- Fig. 2: eine perspektivische Darstellung der Schiene von Fig. 1 mit eingesetzter Oberschiene bzw. Sitzschiene,
- Fig. 3: eine Detaildarstellung des in der Oberschiene gehal- tenen Getriebes,
- Fig. 4: eine Stirnansicht der in Fig. 2 und 3 dargestellten Anordnung in Stirnansicht,
- Fig. 5: beispielhafte Maßangaben über den Verfahrweg der Oberschiene zur Unterschiene in mm,
- Fig. 6: eine Detailansicht der Endanschlagüberdeckung,
- Fig. 7: das Sitzschienenprofil im Getriebebereich,
- Fig. 8: die Oberschienenansicht mit aufgebrochenem Gehäuse,
- Fig. 9: eine Detaildarstellung der Getriebebefestigung zur Unterschiene,
- Fig. 10: einen Vorschlag für eine Montagefolge der erfindungs- gemäßen Einrichtung,
- Fig. 11: der Bereich des Getriebes in vergrößerter Darstel- lung,
- Fig. 12: das Getriebe in Explosionsansicht,
- Fig. 13: eine Detailansicht des Flexwellenadapters,
- Fig. 14: Detailansichten zur Erläuterung der Aufnahme der Crashkräfte bei der erfindungsgemäßen Einrichtung.

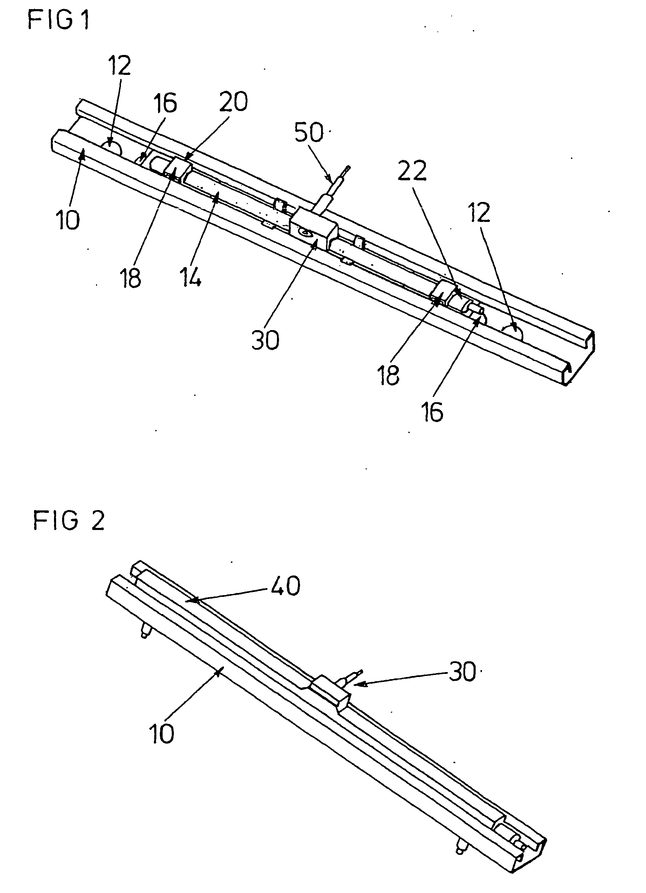

Wie aus Fig. 1 ersichtlich, sitzt innerhalb einer im Querschnitt U-förmigen Unterschiene 10, die endseitig über Befestigungsschrauben 12 am Chassis eines Fahrzeuges festgelegt ist, eine Spindel 14. Diese Spindel 14 ist an ihren beiden Enden über einen Endanschlag 18 in der Unterschiene 10 feststehend angeordnet. Die Verbindung zwischen Spindel 14 und Unterschiene 10 kann auf beliebige Weise erfolgen. Im dargestellten Ausführungsbeispiel ist diese Spindel 14 über ihre Endanschläge 18 mittels Befestigungsnieten 16 am Boden der Unterschiene 10 befestigt. An dem in Fig. 1 links dargestellten oberen Ende der Spindel 14 befindet sich eine Einstellmutter 20 und am rechts unten dargestellten Ende eine Anschlagmutter 22. Auf der Spindel ist ein Getriebe 30, das im Einzelnen noch erläutert werden wird, verfahrbar angeordnet. Das Getriebe 30 wird von einer Flexwelle 50 angetrieben. Bei rotierender Flexwelle bewegt sich das Getriebe auf der Spindel nach links oder rechts, je nachdem, in welche Richtung die Flexwelle 50 dreht.

Mit dem Getriebe 30 ist feststehend eine Oberschiene 40 gekoppelt. Auf der Oberschiene 40 ist ein Sitz, bevorzugt ein Sitz eines Kraftfahrzeugs, befestigt. Die Unterschiene 10 samt Oberschiene 40 und Getriebe 30 sind parallel zueinander unter einem zu verstellenden Sitz angeordnet. Zwischen jeweils einem solchen Schienenpaar sitzt ein Antriebsmotor, welcher die Flexwelle 50 jedes Getriebes 30 antreibt, so dass der Sitz nach vorn oder hinten bewegt werden kann.

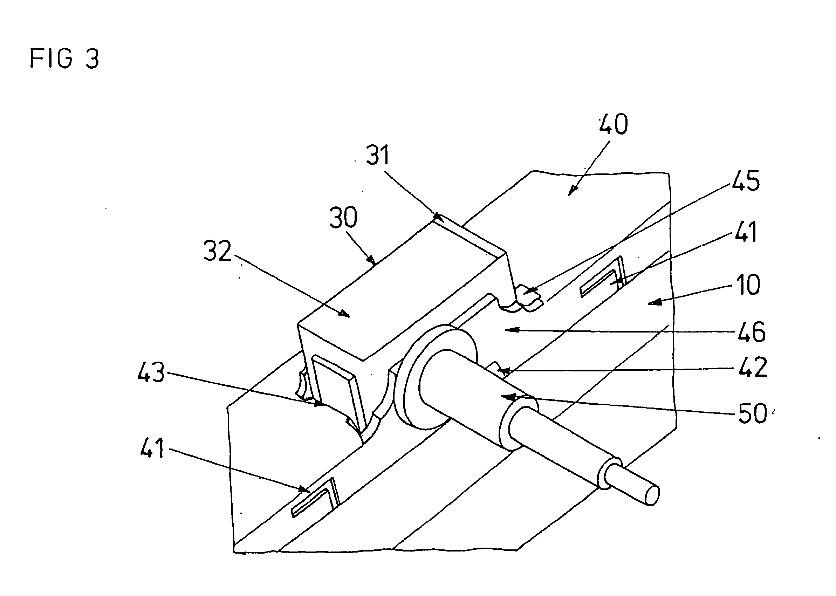

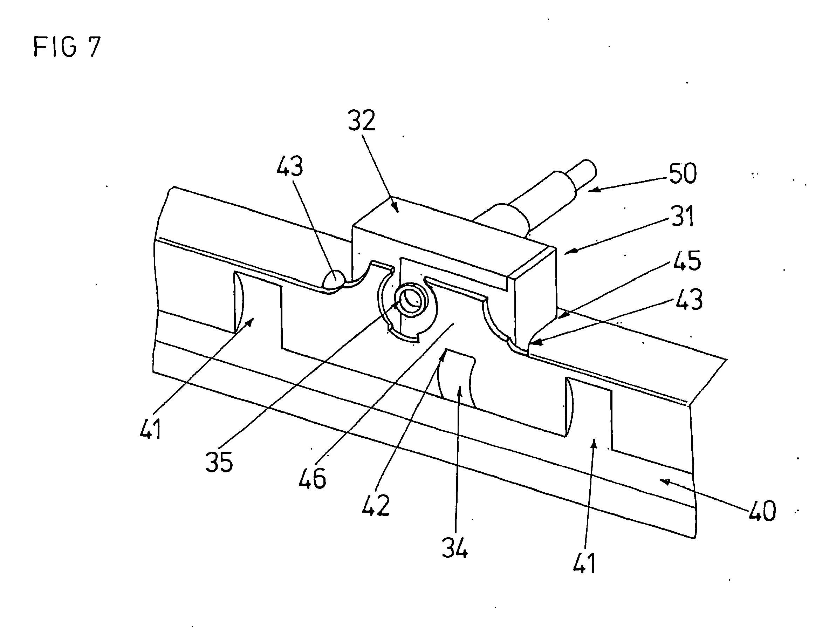

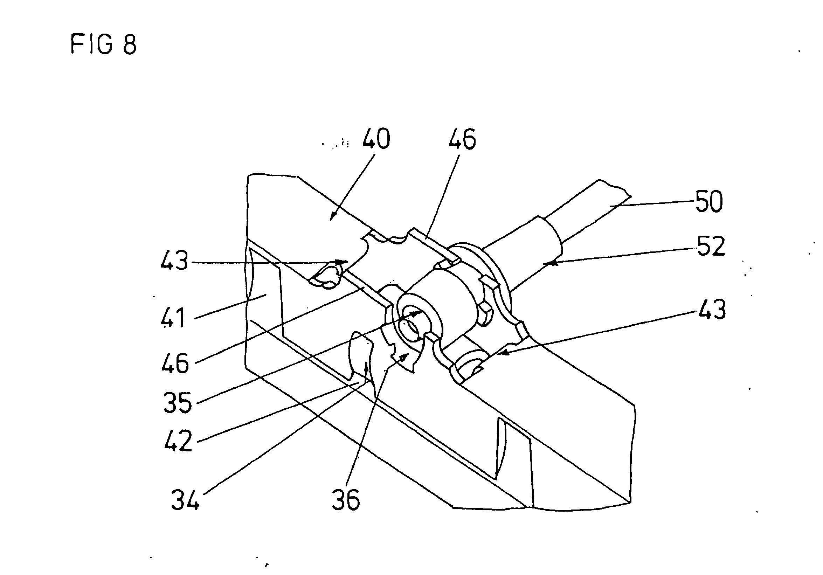

In Fig. 3 ist der Getriebesitz in der Oberschiene 40 vergrößert dargestellt. Eine ähnliche Darstellung, jedoch von der anderen Seite her gesehen, mit weggelassener Unterschiene, zeigt Fig. 7. Die Oberschiene 40 verfügt auf ihrem oberen Wandteil über eine Ausnehmung, in der das kastenförmige Gehäuse des Getriebes 30 sitzt. Das Getriebe 30 wird klemmend in dieser Ausnehmung 45 gehalten. Hierfür sind Wandabschnitte der oberen Wandung um 90° nach innen in die Ausnehmung 45 gebogen und dienen als Anschlagnase 43. Zwei dieser Anschlagnasen 43 befinden sich gegenüberliegend in Längserstreckung der Oberschiene 40. Diese Anschlagnasen 43 sind besonders deutlich in Fig. 8 zu erkennen. Darüber hinaus sitzt das kastenförmige Gehäuse des Getriebes 30 zwischen zwei parallel zueinander liegenden Wandabschnitten 46, die sich einstückig von den Seitenwandungen der Oberschiene 40 parallel nach oben erstrecken. Damit sitzt das Getriebe 30, das aus einem Gehäuseoberteil 31 und einem Gehäuseunterteil 32 gebildet ist und bevorzugt aus Kunststoff besteht, zwischen den beiden erwähnten Anschlagnasen 43 und den Wandabschnitten 46. Der dem Betrachter zugewandte Wandabschnitt 46 ist mit einer Öffnung versehen, durch welche die Flexwelle 50 in das Innere des Gehäuses des Getriebes 30 ragt.

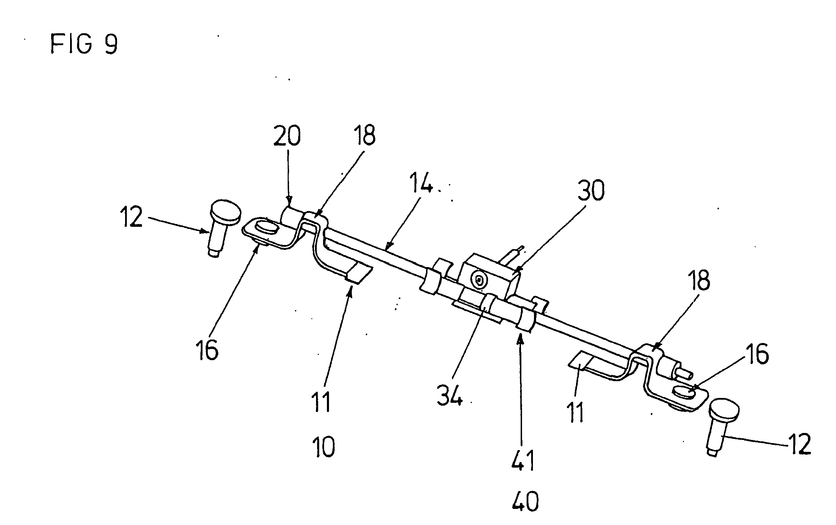

In den Seitenwandungen der Oberschiene 40 sind darüber hinaus sog. Schlitzbrücken 41 eingedrückt. Hierbei handelt es sich um Wandabschnitte, welche durch parallel zueinander in die Seitenwandungen der Oberschiene 40 eingearbeitete Schlitze in das Innere der Oberschiene 40 gedrückt sind. Jeweils zwei solcher Schlitzbrücken 41 befinden sich direkt gegenüberliegend zueinander. Diese Schlitzbrücken 41 verengen den Innenraum der Oberschiene 40 und dienen (vgl. Fig. 9) als Anschlag für das Gehäuseoberteil 31 und Gehäuseunterteil 32 des Getriebes 30. Des weiteren befinden sich gegenüberliegend in den beiden Seitenwandungen der Oberschiene 40 eine Ausnehmung 42, welche zwischen den jeweils angeordneten Schlitzbrücken 41 liegt. Diese Ausnehmung 42 dient zur teilweisen Aufnahme einer Stützscheibe 34 in noch zu erläuternder Art und Weise.

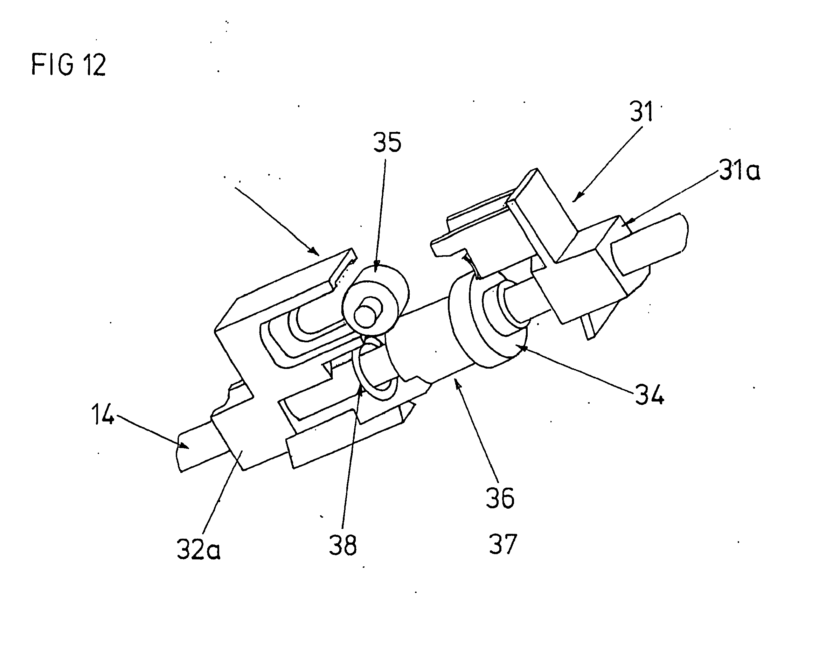

Die Flexwelle 50 ragt in das Innere des Gehäuses des Getriebes 30 über einen Flexwellenadapter 52. Am Ende dieses Flexwellenadapters 52 sitzt im Inneren des Getriebes 30 eine Schnecke 35, die mit einer Spindelmutter 36 in Eingriff steht. Diese Spindelmutter 36 ist mit einem Schneckenrad 37 versehen. Wie insbesondere aus Fig. 12 besonders deutlich erkennbar, ist an diese Spindelmutter 36 einstückig eine Stützscheibe 34 angeformt. Die Spindelmutter samt Stützscheibe bestehen aus Metall. Auf die Spindelmutter ist durch Kunststoffspritzen koaxial das Schneckenrad 37 aufgebracht. Zusätzlich kann noch eine Unterlegscheibe 38 innerhalb des Getriebes 30 vorgesehen sein. Das aus dem Gehäuseunterteil 32 und dem Gehäuseoberteil 31 bestehende Gehäuse des Getriebes 30 besteht aus Kunststoff und verfügt über kastenartige Teile 31a und 32a, durch welche die Spindel 14 geführt ist. Die Enden dieser kastenförmigen Teile 31a und 32a finden an den erwähnten Schlitzbrücken 41 ihren Anschlag. Beim Verfahren des Getriebes 30 durch Antrieb über die Flexwelle 50 wird insgesamt durch die beschriebene Anordnung des Getriebes 30 und der Oberschiene 40 die Oberschiene 40 entlang der Spindel 14 und damit innerhalb der Unterschiene 10 mitgenommen.

Wie Fig. 9 zeigt, können auch in die Bodenwandung der Unterschiene Schlitzbrücken 11 eingearbeitet sein. Bei diesen Schlitzbrücken 11 handelt es sich ebenfalls um in Richtung Oberschiene gebogene bzw. eingedrückte Wandabschnitte, welche - wie Fig. 9 zeigt - vor den jeweiligen Endanschlägen 18 gegenüberliegend zu den Befestigungsnieten 16 angeordnet sind.

Wie die Darstellung von Fig. 9 deutlich zeigt, wird in einem Crashfall die auftretende Axialbeschleunigung des Sitzes sowohl durch die Schlitzbrücken 11 und 41 als auch durch die Stützscheibe im Zusammenspiel mit der Ausnehmung in der Oberschiene 40 abgefangen. Hierbei sind die Schlitzbrücken 11 und 41 jeweils paarweise angeordnet, so dass gleichgültig, ob die Beschleunigung nach vorne oder hinten im Crashfall geht, ein wirksames Abstützen in Einstelleinrichtung der Sitzverstellung gewährleistet ist. Zusätzlich nimmt die Stützscheibe 34 im Zusammenspiel mit der Ausnehmung der Oberschiene ebenfalls bei Beschleunigung in Vorwärts- oder Rückwärtsrichtung die auftretende Kraft auf.

Aus Fig. 9 ist darüber hinaus ebenfalls noch ersichtlich, dass die Endanschläge 18 durch U-förmige Bügel gebildet sind. Die Spindel 14 ragt durch die Längsschenkel dieser U-förmigen Bügel, wobei an den Enden dieser U-förmigen Bügel Haltelaschen vorgesehen sind, durch welche die Befestigungsnieten 16 geführt sind.

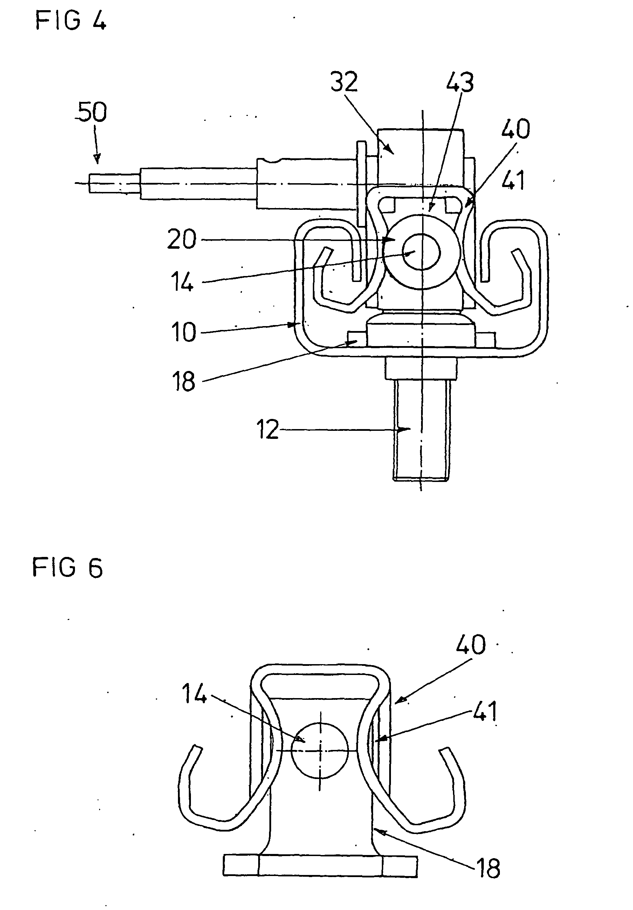

In Fig. 4 ist die in den Fig. 1-3 dargestellte Einrichtung in Stirnansicht der Sitzschiene geschnitten dargestellt. Die bereits erläuterten Bezugszeichen stehen wieder für die bekannten Teile. In der Darstellung von Fig. 4 ist besonders deutlich zu erkennen, dass die im Querschnitt U-förmig gestaltete Unterschiene 10 nach innen zurückgebogene Wandungsteile aufweist. Zwischen diese nach innen gebogenen Wandungsteile der Unterschiene 10 ragen - von den Seitenwandungen der Oberschiene 40 her gesehen - nach außen zurückgebogene Wandungsteile der Oberschiene 40. Durch diese Gestaltung der Oberschiene 40 und der Unterschiene 10 ist gewährleistet, dass ein seitliches Verrutschen der Oberschiene 40 und Unterschiene 10 ausgeschlossen ist. Darüber hinaus ist eine gewisse Führung gewährleistet.

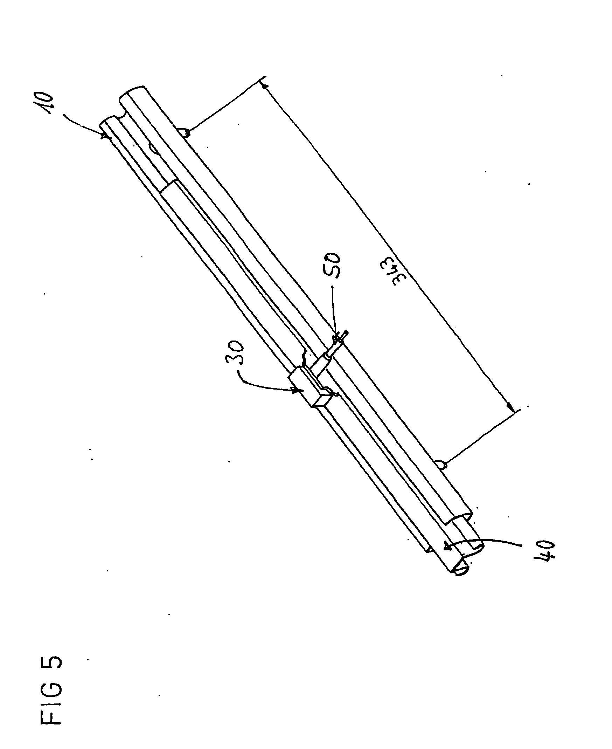

Fig. 5 verdeutlicht schematisch den möglichen Verfahrweg zwischen Oberschiene und Unterschiene. Im vorliegenden Ausführungsbeispiel ist als möglicher Verfahrweg 343mm vorgesehen.

Fig. 6 zeigt in Schnittansicht besonders deutlich die in die Oberschiene 40 eingearbeiteten Schlitzbrücken, die merklich den Innenraum in der U-förmig gestalteten Oberschiene verengen und somit als Anschlag für das Getriebe 30 dienen.

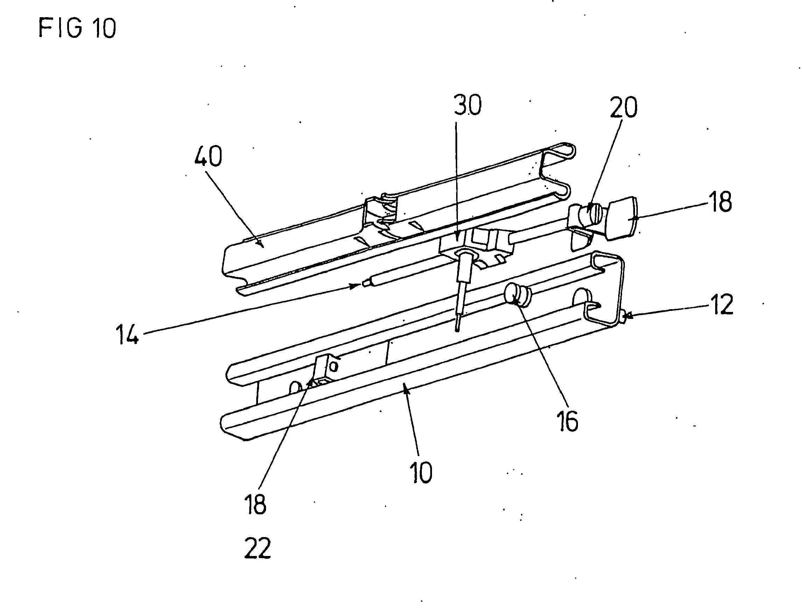

Fig. 10 zeigt die Oberschiene 40 und die Unterschiene 10 samt oben beschriebenen Einzelkomponenten in Explosionsdarstellung. Die bereits bekannten Komponenten sind mit den gleichen Bezugszeichen wie oben versehen.

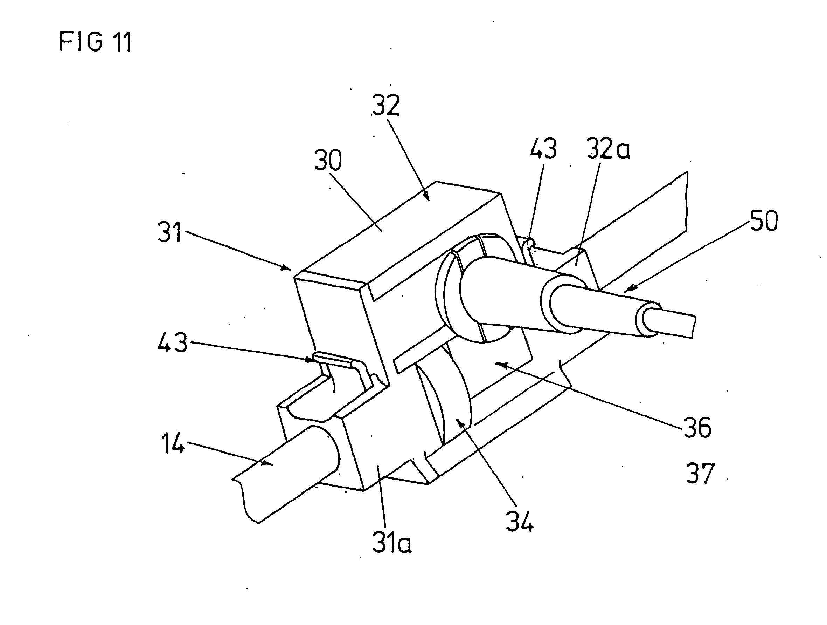

In Fig. 11 ist das Getriebe 30 mit seinem Gehäuseunterteil 32 und dem Gehäuseoberteil 31 samt kastenförmiger, einstückig angeformter Elemente im zusammengesetzten Zustand gezeigt. Auch in dieser Darstellung sind die von der oberen Wandung der Oberschiene 40 nach innen umgeklappten Anschlagnasen zu erkennen. Die seitlich sich von dem Gehäuse des Getriebes 30 hervor streckende Stützscheibe 34. Die bereits erläutete Fig. 12 zeigt das Getriebe in Explositionsansicht. Hier ist die Spindelmutter 36 samt Schneckenrad und einstückig angeformter Stützscheibe 34 deutlich zu erkennen. Die Schnecke 35, die von der Flexwelle angetrieben wird, kämmt mit dem Schneckenrad 37. Durch diesen Antrieb bewegt sich das Getriebe entlang der Spindel 14.

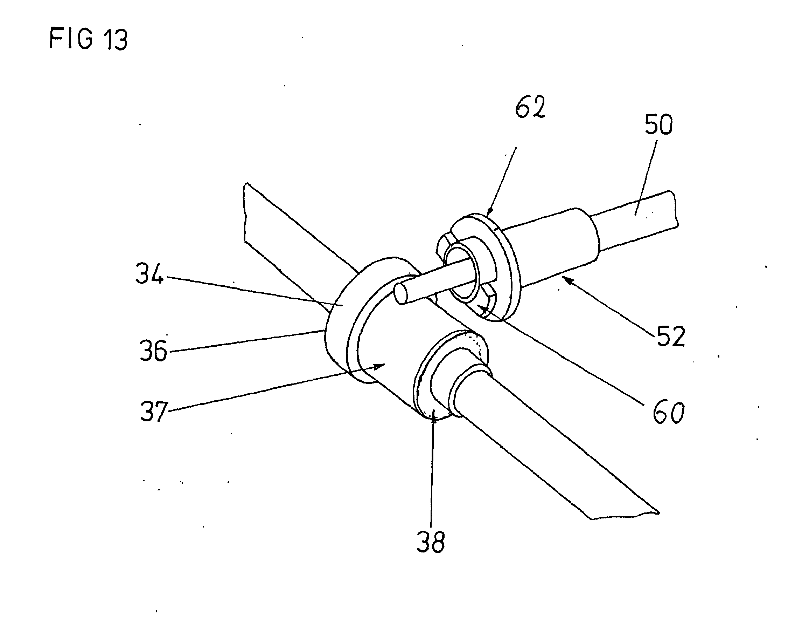

In Fig. 13 ist das Getriebe ohne Gehäuse nochmals deutlich dargestellt, wobei der besseren Deutlichkeit wegen die Schnecke auf der Flexwelle 50 weggelassen wurde. Die Flexwelle 50 ist in über den bereits erwähnten Flexwellenadapter 52 in das Gehäuse des Getriebes geführt. Ein Bajonettverschluss 60 samt Gripps 62 sorgt für eine geeignete Halterung der Flexwelle am Gehäuse des Getriebes 30.

### Bezugszeichenliste

- 10: Unterschiene
- 11: Schlitzbrücke
- 12: Befestigungsschraube
- 14: Spindel
- 16: Befestigungsniete
- 18: Endanschlag

- 20: Einstellmutter
- 22: Anschlagmutter
- 30: Getriebe
- 31: Gehäuseoberteil
- 32: Gehäuseunterteil
- 34: Stützscheibe
- 35: Schnecke
- 36: Spindelmutter
- 37: Schneckenrad
- 38: Unterlegscheibe
- 40: Oberschiene
- 41: Schlitzbrücke
- 42: Ausnehmung
- 43: Anschlagnase
- 45: Ausnehmung
- 46: Wandabschnitt
- 50: Flexwelle
- 52: Flexwellenadapter

## Patentansprüche

1. Einrichtung für eine Sitzlängsverstellung, insbesondere innerhalb eines Kfz, mit einer an einem Chassis festgelegten Unterschiene (10), innerhalb der eine Oberschiene (40), an der eine Sitz befestigt ist, motorisch verfahrbar ist, wobei innerhalb der Oberschiene (40) eine an der Unterschiene (10) mit ihren jeweiligen Enden festgelegte Spindel (14) sitzt, auf welcher ein mit der Oberschiene (40) feststehend gekoppeltes Getriebe (30) mit einer Schnecke und einer mit der Schnecke (35) kämmenden Spindelmutter (36) axial beweglich angeordnet ist, wobei
die Spindelmutter (36) mit einem Schneckenrad (37) und einer Stützscheibe (34) versehen ist, **dadurch gekennzeichnet, dass** die Stützscheibe (34) und die Spindelmutter (36) aus Metall bestehen und auf die Spindelmutter (36) koaxial das Schneckenrad (37) durch Kunststoffspritzen aufgebracht ist.

2. Einrichtung nach Anspruch 1,
**dadurch gekennzeichnet, dass**
das Getriebe (30) klemmend in der Oberschiene (40) gehalten ist und ein Getriebegehäuse aufweist, dessen gegenüberliegende Gehäusewandungen (46) zwischen Wandteilen der Oberschiene (40) liegen und dessen obere Wand aus der Oberschiene (40) hervorsteht.

3. Einrichtung nach Anspruch 1 oder 2,
**dadurch gekennzeichnet, dass**
mindestens eines der Wandteile (46) der Oberschiene (40) eine Ausnehmung (42) aufweist, durch welche eine mit einem Antriebsmotor gekoppelte Flexwelle (50) geführt ist.

4. Einrichtung nach Anspruch 1, 2 oder 3,
**dadurch gekennzeichnet, dass**
Seitenwandungen der Oberschiene 40) Wandungsteile (41) aufweist, welche in das Innere der Oberschiene (40) gedrückt sind, und dass sich das Getriebegehäuse an diesen Wandungsteilen (41) abstützt

5. Einrichtung nach einem der Ansprüche 1 bis 4,
**dadurch gekennzeichnet, dass**
das Getriebegehäuse zwei aus Kunststoff bestehende Gehäuseschalen (31, 32) aufweist, welche durch Ultraschweißung miteinander verbunden sind.

6. Einrichtung nach Ansprüch 2,
**dadurch gekennzeichnet, dass**
die klemmende Halterung des Getriebes (30) durch gegenüberliegend in eine Ausnehmung (45) der Oberschiene (40) eingearbeitete L-förmig gebogene Metallbügel, zwischen denen das Getriebegehäuse mit Wandschrägen eingeschoben wird.

7. Einrichtung nach einem der Ansprüche 1-6,
**dadurch gekennzeichnet, dass**
an die Spindelmutter (36) eine Stützscheibe (34) einstückig angeformt ist.

8. Einrichtung nach Anspruch 5,
**dadurch gekennzeichnet, dass**
die beiden Gehäuseschalen (31, 32) des Getriebegehäuses in Axialrichtung aneinander gefügt sind.

9. Einrichtung nach einem der Ansprüche 1 bis 8,
**dadurch gekennzeichnet, dass**
im Getriebegehäuse das Schneckengetriebe ohne die Verwendung gesonderter Lagerbauteile direkt gelagert ist.

## Claims

1. A device for the longitudinal adjustment of a seat, in particular inside a motor vehicle, with a lower rail (10) which is fixed to a chassis and inside which an upper rail (40) on which a seat is fastened is movable by a motor, wherein a spindle (14), which is fixed to the lower rail (10) by its respective ends and on which a gear mechanism (30) coupled in a fixed manner to the upper rail (40) is arranged so as to be axially movable by a worm and a spindle nut (36) meshing with the worm (35), is mounted inside the upper rail (40), wherein the spindle nut (36) is provided with a worm gear (37) and a supporting ring (34), **characterized in that** the supporting ring (34) and the spindle nut (36) consist of metal and the worm gear (37) is attached coaxially to the spindle nut (36) by plastic injection.

2. A device according to claim 1, **characterized in that** the gear mechanism (30) is held clamped in the upper rail (40) and has a gear mechanism housing, the opposite walls (46) of which are situated between wall parts of the upper rail (40) and the upper wall of which projects out of the upper rail (40).

3. A device according to claim 1 or 2, **characterized in that** at least one of the wall parts (46) of the upper rail (40) has a recess (42) through which a flex shaft (50) coupled to a drive motor extends.

4. A device according to claim 1, 2 or 3, **characterized in that** lateral walls of the upper rail (40) [have] wall parts (41) which are pressed into the interior of the upper rail (40), and the gear mechanism housing is supported on these wall parts (41).

5. A device according to any one of claims 1 to 4, **characterized in that** the gear mechanism housing has two housing shells (31, 32) which consist of plastics material and which are connected to each other by ultra[sound] welding.

6. A device according to claim 2, **characterized in that** the clamping retention of the gear mechanism (30) [is carried out] by metal brackets bent into an L-shape which are formed in a recess (45) in the upper rail (40) in an opposed manner and between which the gear mechanism housing is pressed by wall bevels.

7. A device according to any one of claims 1 to 6, **characterized in that** a support ring (34) is formed in one piece on the spindle nut (36).

8. A device according to claim 5, **characterized in that** the two housing shells (31, 32) of the gear mechanism housing are joined to each other in the axial direction.

9. A device according to any one of claims 1 to 8, **characterized in that** the worm gear is mounted directly in the gear mechanism housing without the use of special bearing components.

## Revendications

1. Installation de réglage longitudinal d'un siège, notamment dans un véhicule automobile, comprenant :
un rail inférieur (10) fixé au châssis et dans lequel un rail supérieur (40) sur lequel est fixé un siège, peut être déplacé par un moteur,
dans le rail supérieur (40) est logée une broche filetée (14) dont les extrémités respectives sont fixées au rail inférieur (10) et sur laquelle est montée de manière mobile dans la direction axiale une transmission (30) couplée de manière fixe au rail supérieur (40) et comportant une vis sans fin (35) ainsi qu'un écrou (36) engrenant avec cette vis (35), l'écrou (36) étant équipé d'une roue à vis (37) et d'une rondelle d'appui (34), **caractérisée en ce que**
la rondelle d'appui (34) et l'écrou (36) sont réalisés en métal, et la roue à vis (37) est réalisée coaxialement sur l'écrou (36) par injection de matière plastique.

2. Installation conforme à la revendication 1,
**caractérisée en ce que**
la transmission (30) est maintenue serrée dans le rail supérieur (40) et comporte un boîtier de transmission dont les parois opposées (46) sont situées entre des parties de parois du rail supérieur, et dont la paroi supérieure dépasse du rail supérieur (40).

3. Installation conforme à la revendication 1 ou 2,
**caractérisée en ce qu'**
au moins l'une des parties de parois (46) du rail supérieur (40) comporte une découpe (42) à travers laquelle passe un axe flexible (50) couplé à un moteur d'entraînement.

4. Installation conforme à la revendication 1, 2 ou 3,
**caractérisée en ce que**
les parois latérales du rail supérieur (40) comportent des parties de parois (41) qui sont enfoncées dans le rail supérieur (40), et le boîtier de transmission s'appuie contre ces parties de parois (41).

5. Installation conforme à l'une des revendications 1 à 4,
**caractérisée en ce que**
le boîtier de transmission comporte deux coquilles de boîtier (31, 32) réalisées en matière plastique qui sont reliées par soudage aux ultrasons.

6. Installation conforme à la revendication 2,
**caractérisée en ce que**
la fixation serrée de la transmission (30) est réalisée par des arceaux métalliques recourbés en forme de L usinés dans une découpe (45) du rail supérieur (40) et entre lesquels se glissent des rampes de parois du boîtier de transmission.

7. Installation conforme à l'une des revendications 1 à 6,
**caractérisée en ce qu'**
une rondelle d'appui (34) est réalisée en une seule pièce sur l'écrou (36).

8. Installation conforme à la revendication 5,
**caractérisée en ce que**
les deux coquilles de boîtier (31, 32) du boîtier de transmission, s'interpénètrent dans la direction axiale.

9. Installation conforme à l'une des revendications 1 à 8,
**caractérisée en ce que**
la transmission à vis est montée directement dans le boîtier de transmission sans utiliser de pièce de palier particulière.
